# EUROPÄISCHE PATENTSCHRIFT

(11) **EP 2 815 950 B1**
(45) Veröffentlichungstag und Bekanntmachung des Hinweises auf die Patenterteilung: **17.08.2016**
(21) Anmeldenummer: 14450029.5
(22) Anmeldetag: 04.06.2014
(51) Int. Cl.: B62D 13/02, B60D 1/30

(54) **Sattelkupplung**
Fifth wheel
Sellette d'attelage

(30) Priorität: 18.06.2013 AT 4912013
(43) Veröffentlichungstag der Anmeldung: 24.12.2014
(73) Patentinhaber: Scharmüller, Josef, 4892 Fornach (AT); Scharmüller, Josef, jun., 4892 Fornach (AT)
(72) Erfinder: Scharmüller, Josef, AT - 4892 Fornach (AT); Scharmüller, Christine, AT - 4892 Fornach (AT)
(74) Vertreter: Gibler & Poth Patentanwälte KG

(56) Entgegenhaltungen:
- WO-A1-2009/019444
- US-A1- 2006 145 450
- US-A1- 2007 216 134
- US-A1- 2013 082 453

## Beschreibung

Die Erfindung betrifft eine Sattelkupplung gemäß dem Oberbegriff des Patentanspruches 1.

Sattelkupplungen - sofern an Sattelzugmaschine bzw. am Sattelanhänger montiert - sind Teil eines Sattelzuges. Sattelzüge sind Transportfahrzeuge, welche flexibel und kostengünstig einsetzbar sind. Der Sattelzug umfasst die Sattelzugmaschine und den angekuppelten Sattelanhänger. Der Sattelanhänger ist ein Anhänger ohne Vorderachse, üblicherweise jedoch mit mehreren starren Hinterachsen. Die Sattelkupplung ist dabei - in Fahrtrichtung des Gespanns gesehen - vor der hintersten Achse der Sattelzugmaschine angeordnet. Derart kann die Sattelzugmaschine einen Teil der Masse des Anhängers tragen.

Nachteilig an derartigen Sattelzügen ist, dass es bei Kurvenfahrten zu starken Abnützungen der Reifen des Sattelanhängers kommt.

Aus der US 2007/0216134 A1 ist eine Sattelkupplung mit einer Winkelmessvorrichtung bekannt, welche den Drehwinkel zwischen einer Sattelplatte und einem Königszapfen misst. Hierbei ist in einer Ausführungsform ein Hall-Sensor in dem Königszapfen integriert, wobei in der den Königszapfen umschließenden Fixiereinrichtung der Sattelplatte ein um den Königszapfen angeordneter Magnet angeordnet ist.

Aus der US 2013/0082453 A1 ist eine Sattelkupplung mit einer Winkelmessvorrichtung bekannt, welche den Drehwinkel zwischen einer Sattelplatte und einem Königszapfen misst. Die Winkelmessvorrichtung kann einen gegenüber dem Königszapfen drehbar gelagerten Ring aufweisen, welcher Ring über einen Fortsatz lagefest zu der Sattelplatte gehalten wird. Die Position des Ringes gegenüber dem Königszapfen kann dann mittels eines optischen oder magnetischen Sensors ausgelesen werden.

Aus der US 2006/0145450 A1 ist eine Sattelkupplung mit einer Winkelmessvorrichtung basierend auf Hallsensoren bekannt.

Aus der WO 2009/019444 A1 ist ein Sattelzug mit einer Zwangslenkung bekannt, wobei der Sattelzug auf nicht näher definierte Weise die Beschleunigung, den Drehwinkel zwischen Sattelschlepper und Anhänger sowie die Gierrate misst.

Aufgabe der Erfindung ist es daher eine Sattelkupplung der eingangs genannten Art anzugeben, mit welcher die genannten Nachteile vermieden werden können, mit welcher eine Abnützung der Reifen des Sattelanhängers reduziert werden kann.

Erfindungsgemäß wird dies durch die Merkmale des Patentanspruches 1 erreicht.

Dadurch ergibt sich der Vorteil, dass der Drehwinkel der Sattelzugmaschine zu dem Sattelanhänger ermittelt werden kann. Der gemessene Drehwinkel kann weiters zu einer Zwangslenkung des Sattelanhängers verwendet werden, wodurch die Abnutzung der Reifen des Sattelanhängers gering gehalten werden kann. Weiters kann dadurch die Wendigkeit, und insbesondere auch die Geländegängigkeit, des Sattelzuges verbessert werden. Durch die erhöhte Geländegängigkeit kann das Anwendungsgebiet des Sattelzuges wesentlich vergrößert werden. Beispielsweise kann der Sattelzug für die Verwendung abseits befestigter Straßen ausgebildet sein. Hierbei kann insbesondere vorgesehen sein, dass der Sattelzug für die Verwendung in der Landwirtschaft oder dem Bergbau vorgesehen ist. Weiters kann dadurch die zu tragende Last erhöht werden, weshalb ein Sattelzug mit einer derartigen Sattelkupplung besonders für Schwerlasttransporte geeignet ist.

Die Erfindung betrifft weiters einen Sattelzug gemäß dem Oberbegriff des Patentanspruches 11.

Die Unteransprüche betreffen weitere vorteilhafte Ausgestaltungen der Erfindung.

Ausdrücklich wird hiermit auf den Wortlaut der Patentansprüche Bezug genommen, wodurch die Ansprüche an dieser Stelle durch Bezugnahme in die Beschreibung eingefügt sind und als wörtlich wiedergegeben gelten.

Die Erfindung wird unter Bezugnahme auf die beigeschlossenen Zeichnungen, in welchen lediglich bevorzugte Ausführungsformen beispielhaft dargestellt sind, näher beschrieben. Dabei zeigt:
Fig. 1 eine erste bevorzugte Ausführungsform einer Sattelkupplung in Seitenansicht;
Fig. 2 einen Teil der ersten bevorzugte Ausführungsform einer Sattelkupplung in axonometrischer Darstellung von schräg unten;
Fig. 3 und 4 die erste bevorzugte Ausführungsform einer Sattelkupplung in axonometrischer Darstellung von schräg oben;
Fig. 5 eine zweite bevorzugte Ausführungsform einer Sattelkupplung in Seitenansicht;
Fig. 6 und 7 die zweite bevorzugte Ausführungsform einer Sattelkupplung in axonometrischer Darstellung von schräg oben;
Fig. 8 die zweite bevorzugte Ausführungsform einer Sattelkupplung als Teilschnitt in Seitenansicht;
Fig. 9 die zweite bevorzugte Ausführungsform einer Sattelkupplung als Schnitt in Seitenansicht;
Fig. 10 und 11 die zweite bevorzugte Ausführungsform einer Sattelkupplung als Teilschnitt in axonometrischer Darstellung von schräg oben;

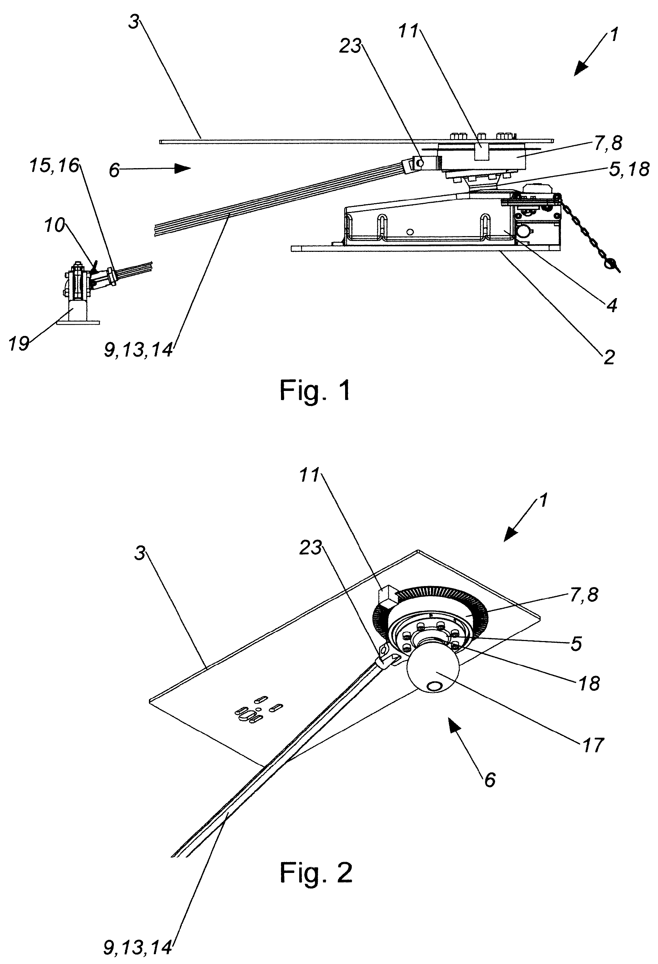

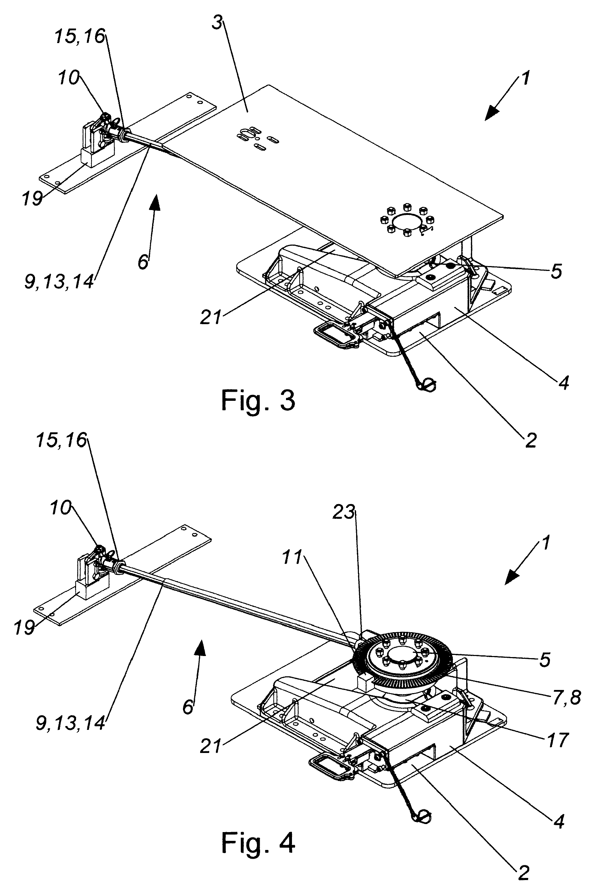

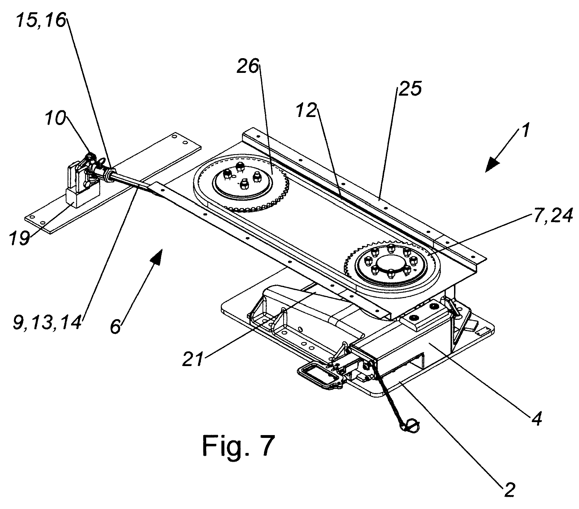

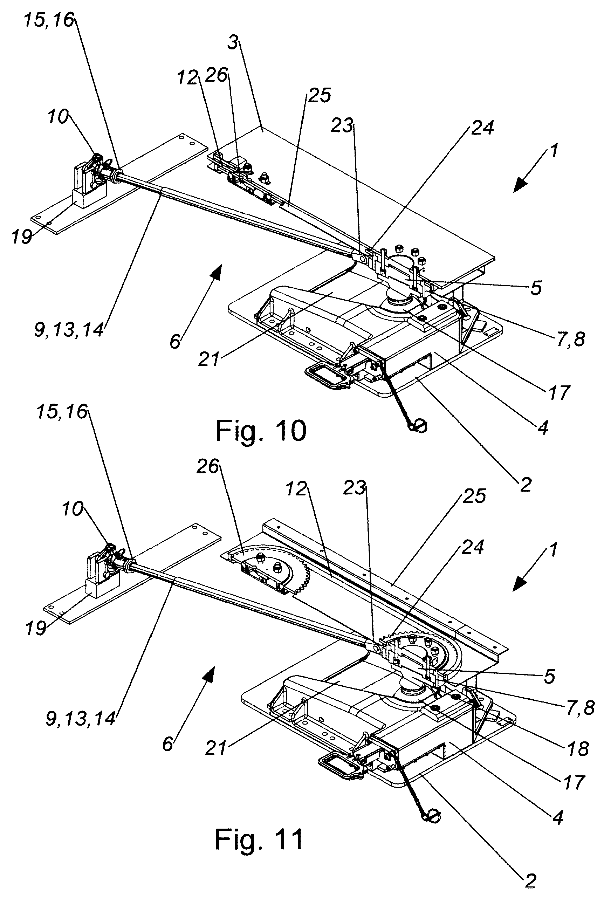

Die Fig. 1 bis 11 zeigen bevorzugte Ausführungsformen einer Sattelkupplung 1 zur Kupplung einer Sattelzugmaschine 2 mit einem Sattelanhänger 3, mit einer Sattelplatte 4 zur Montage auf der Sattelzugmaschine 2 und einem Eingriffselement 5 zur Montage auf dem Sattelanhänger 3. Die Sattelzugmaschine 2 kann auch als Sattelkraftfahrzeug bezeichnet werden. Der Sattelanhänger 3 ist auch unter den Bezeichnungen Sattelauflieger, Auflieger bzw. Traiter bekannt. Die Sattelkupplung 1 dient zur Kupplung des Sattelanhängers 3 an die Sattelzugmaschine 2, wobei das Eingriffselement 5 in die Sattelplatte 4 eingreift und von dieser drehbar gehalten wird. Sattelzugmaschine 2 und Sattelanhänger 3 bilden einen Sattelzug bilden. Der Sattelzug kann auch als Gespann bezeichnet werden.

Die Sattelplatte 4 ist zur Montage an der Sattelzugmaschine 2 vorgesehen und kann dazu insbesondere an die Sattelzugmaschine 2 angeschraubt werden.

Das Eingriffselement 5 ist zur Montage an den Sattelanhänger 3 montiert und kann dazu insbesondere an den Sattelanhänger 3 angeschraubt werden.

Sattelplatte 4 und/oder Eingriffselement 5 können Stahl umfassen oder im Wesentlichen aus Stahl ausgebildet sein.

In den Fig. 1 bis 11 ist von der Sattelzugmaschine 2 und dem Sattelanhänger 3 nur jener Teil dargestellt, mit welchem die Sattelplatte 4 oder das Eingriffselement 5 verbunden ist.

Vorgesehen ist, dass eine Winkelmessvorrichtung 6 umfassend einen Drehwinkelaufnehmer 7 zur Messung des Drehwinkels zwischen dem Eingriffselement 5 und der Sattelplatte 4 vorgesehen ist. Hierbei entspricht der Drehwinkel zwischen dem Eingriffselement 5 und der Sattelplatte 4 dem Winkel zwischen der Längsrichtung der Sattelzugmaschine 2 und der Längsrichtung des Sattelanhängers 3. Der Drehwinkel beträgt in der Geradeausfahrt des Sattelzuges 0° und weicht in der Kurvenfahrt von 0° ab. Durch die Messung des Drehwinkels können lenkbare Achsen des Sattelanhängers 3 zwangsgelenkt werden, wobei durch die Zwangslenkung die Kurvenfahrt erleichtert wird und die Abnützung der Reifen gering gehalten werden kann.

Insbesondere kann ein Sattelzug umfassend eine Sattelzugmaschine 2 und einen Sattelanhänger 3 vorgesehen sein, wobei die Sattelzugmaschine 2 und der Sattelanhänger 3 mittels der vorteilhaft ausgebildeten Sattelkupplung 1 miteinander gekuppelt sind. Der Sattelzug kann hierbei für die Verwendung im Fernlastverkehr vorgesehen sein. Weiters kann vorgesehen sein, dass der Sattelzug für den Offroad-Bereich vorgesehen ist, beispielsweise für die Landwirtschaft oder den Bergbau. Weiters kann insbesondere vorgesehen sein, dass der Sattelzug als Schwerlasttransporter ausgebildet ist. Derartige Schwerlasttransporter weisen eine hohe Anzahl an Achsen auf.

Besonders bevorzugt kann vorgesehen sein, dass der Sattelanhänger 3 eine Zwangslenkung aufweist, und dass der Lenkwinkel der Zwangslenkung durch die Winkelmessvorrichtung 6 vorgegeben ist. Hierbei weist der Sattelanhänger 3 mindestens eine lenkbare Achse auf, welche mittels der Zwangslenkung gelenkt ist. Die Winkelmessvorrichtung 6 kann insbesondere ein Teil der Zwangslenkung sein.

Weiters kann ein Verfahren zur Zwangslenkung eines Sattelzuges vorgesehen sein, wobei ein Drehwinkel zwischen der Sattelzugmaschine 2 und dem Sattelanhänger 3 durch die Winkelmessvorrichtung 6 bestimmt wird, und anhand des gemessenen Drehwinkels mindestens eine zwangsgelenkte Achse des Sattelanhängers 3 gelenkt wird.

Besonders bevorzugt kann vorgesehen sein, dass das Eingriffselement 5 eine Kupplungskugel 17 aufweist. Hierbei kann die Sattelplatte 4 insbesondere eine Kugelpfanne 20 zur Aufnahme der Kupplungskugel 17 aufweisen. Die Kugelpfanne 20 kann dabei im Wesentlichen in deren Formgebung gegengleich zur Kupplungskugel 17 ausgebildet sein, womit die Kupplungskugel 17 zuverlässig von der Kugelpfanne 20 aufgenommen werden kann und die Kupplungskugel 17 zuverlässig in der Kugelpfanne 20 in sämtliche Richtungen verdreht werden kann, womit das in die Kugelpfanne 20 eingreifende Eingriffselement 5 rotiert und verkippt werden kann. Vorteilhaft dabei ist, dass die Drehung der Kupplungskugel 17 um einen definierten Punkt erfolgt, nämlich den Mittelpunkt der Kupplungskugel 17, wodurch eine definierte Kinematik gegeben ist. Vorteilhaft dabei ist, dass selbst bei großen Wank- oder Kippwinkeln zuverlässig Kräfte von der Sattelzugmaschine 2 zum Sattelanhänger 3 - und umgekehrt - übertragen werden können.

In vorteilhafter Weiterbildung kann vorgesehen sein, dass angrenzend an die Kugelpfanne 20 eine Gleitführung 21 zur Führung der Kupplungskugel 17 zu der Kugelpfanne 20 angeordnet ist. Derart kann das Hinzuführen der Kupplungskugel 17 in die Kugelpfanne 20 vereinfacht werden. Zum Kuppeln kann die Sattelzugmaschine 2 rückwärts in Richtung des dabei stehenden Sattelanhängers 3 geschoben werden. Dabei kann die Kupplungskugel 17 einfach in die randseitig breite und schmäler zulaufende Gleitführung 21 eingeführt werden. Mittels der Gleitführung 21 kann - beim weiteren Rückwärtsschieben der Sattelzugmaschine 2 - die Kupplungskugel 17 weiter - im Wesentlichen selbsttätig - in Richtung der Kugelpfanne 20 geschoben werden.

Weiters kann vorgesehen sein, dass die Kugelpfanne 20 einen Niederhalter 22 aufweist, wobei der Niederhalter 22 die Kupplungskugel 17 in der Kugelpfanne 20 hält.

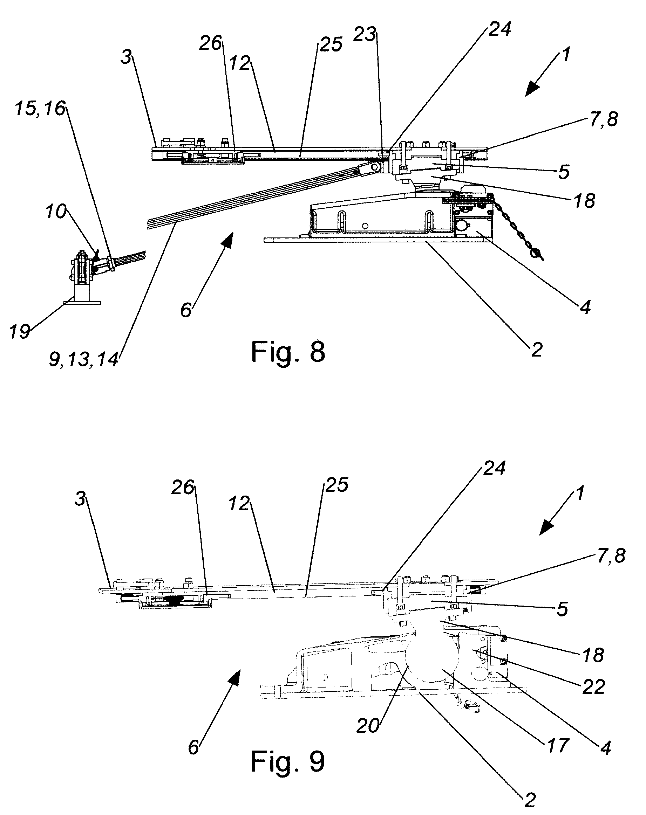

In Fig. 9 ist ein Schnitt durch die Kugelpfanne 20 der zweiten bevorzugten Ausführungsform dargestellt.

Insbesondere kann vorgesehen sein, dass an der Kupplungskugel 17 ein Hals 18 angeformt ist, und dass eine Verbindungslinie zwischen einem Mittelpunkt der Kupplungskugel 17 und dem Hals 18 einen Winkel zwischen 3° und 10° zu einer Horizontalen einschließt. Durch diese geknickte Verbindungslinie kann eine besonders gute Kräfteübertragung erreicht werden. Weiters kann dadurch ein großer Kippwinkel erreicht werden.

Alternativ kann vorgesehen sein, dass das Eingriffselement 5 einen Königszapfen aufweist.

Besonders bevorzugt kann vorgesehen sein, dass die Winkelmessvorrichtung 6 ein Ringelement 8 umfasst, dass das Ringelement 8 das Eingriffselement 5 zumindest teilweise, insbesondere vollständig, umschließt und bezüglich des Drehwinkels gegenüber dem Eingriffselement 5 verdrehbar gelagert ist, und dass das Ringelement 8 bezüglich des Drehwinkels lagefest zu der Sattelplatte 4 gehalten ist. Das Ringelement 8 kann insbesondere der äußere Ring eines Gleitlagers oder eines Kugellagers sein, wodurch sich das Ringelement 8 besonders leicht drehen lässt. Da das Ringelement 8 bezüglich des Drehwinkels lagefest zu der Sattelplatte 4 kann durch den Relativwinkel zwischen dem Ringelement 8 und dem Eingriffselement 5 der Drehwinkel einfach festgestellt werden. Hierbei kann die Messung des Drehwinkels rein mechanisch erfolgen. Durch das Ringelement 8 kann die Sattelkupplung 1 um 360° verdreht werden, wodurch der Drehwinkelaufnehmer 7 die Bewegungsfreiheit der Sattelkupplung 1 nicht einschränkt.

Hierbei kann insbesondere vorgesehen sein, dass das Ringelement 8 einen Hals 18 des Eingriffselementes 5 umschließt, wobei eine Mittellinie des Halses im Wesentlichen durch den Mittelpunkt des Ringelementes 8 führt. Hierdurch kann eine besonders einfache und wenig verzerrte Kinematik zur Bestimmung des Drehwinkels erreich werden, da der Relativwinkel zwischen dem Ringelement 8 und dem Eingriffselement 5 im Wesentlichen dem Drehwinkel zwischen der Sattelzugmaschine 2 und dem Sattelanhänger 3 entspricht.

Hierbei kann vorgesehen sein, dass bei dem Verfahren zur Zwangslenkung eines Sattelzuges ein am Eingriffselement 5 drehbar gelagertes Ringelement 8 bezüglich des Drehwinkels lagefest zu der Sattelplatte 4 gehalten wird, und anhand des Relativwinkels zwischen dem Ringelement 8 und dem Eingriffselement 5 der Drehwinkel bestimmt wird.

Alternativ kann vorgesehen sein, dass der Drehwinkelaufnehmer 7 optoelektronisch ausgebildet ist. Hierbei kann auf der Sattelplatte 4 oder dem Eingriffselement 5 eine Kamera angeordnet sein, welche das gegenüberliegende Teil optisch erfasst und derart den Drehwinkel bestimmt.

Als weitere, nicht dargestellte, Alternative kann vorgesehen sein, dass der Drehwinkelaufnehmer 7 wenigstens einen die Sattelplatte 4 und dass Eingriffselement 5 verbindenden Hubkolben aufweist, wobei durch die Auslenkung des Hubkolbens auf den Drehwinkel rückgeschlossen werden kann.

Besonders bevorzugt kann vorgesehen sein, dass eine Haltestange 9 an einem ersten Ende an dem Ringelement 8 vertikal verschwenkbar gelagert ist und an einem zweiten Ende eine Nebenkuppelvorrichtung 10 zum schwenkbaren Kuppeln der Haltestange 9 an die Sattelzugmaschine 2 aufweist. Hierbei bildet die Haltestange 9 eine zumindest mittelbare Verbindung zwischen dem Ringelement 8 und der Sattelplatte 4, wobei durch die lediglich vertikale Verschwenkbarkeit der Haltestange 9 das Ringelement 8 gegenüber der Sattelplatte 4 bezüglich des Drehwinkels festgehalten wird, wobei das Ringelement 8 weiterhin einer Kipp- oder Wankbewegung folgen kann.

Die Haltestange 9 kann insbesondere in der Vertikalebene der Längsrichtung der Sattelzugmaschine 2 angeordnet sein. Weiters kann die Haltestange 9 einen Winkel zwischen 5° und 15° zu der Längsrichtung der Sattelzugmaschine 2 aufweisen.

Durch die Haltestange 9 kann das Ringelement 8 bezüglich des Drehwinkels besonders robust und zuverlässig festgehalten werden.

Alternativ kann vorgesehen sein, dass an der Sattelplatte 4 eine Führung in Richtung Ringelement 8 ragt, in welche ein Fortsatz des Ringelementes 8 eingreift.

Als weitere Alternative zu der Haltestange 9 kann vorgesehen sein, dass in dem Ringelement 8 und der Sattelplatte 4 miteinander wechselwirkende Magnetanordnungen angeordnet sind, welche das Ringelement 8 bezüglich des Drehwinkels festhalten.

Die Haltestange 9 kann hierbei insbesondere mittels eines Gabelgelenks 23 mit dem Ringelement 8 verbunden sein, wobei eine Drehachse des Gabelgelenkes 23 orthogonal zu einer Drehachse des Ringelementes 8 angeordnet ist. Das Gabelgelenk 23 gestattet hierbei dem Ringelement 8 eine hohe Bewegungsfreiheit bezüglich einer Wank- oder Kippbewegung, wobei eine Drehbewegung des Ringelementes 8 bezüglich der Sattelplatte 4 unterbunden wird.

Mittels der Nebenkuppelvorrichtung 10 kann die Haltestange 9 besonders einfach lösbar mit der Sattelzugmaschine 2 verbunden werden. Hierbei kann insbesondere vorgesehen sein, dass die Sattelzugmaschine 2 eine Nebenkupplungsaufnahme 19 zum Kuppeln mit der Nebenkuppelvorrichtung 10 aufweist. Hierbei kann ein Großteil der Winkelmessvorrichtung 6 an dem Sattelanhänger 3 angeordnet sein, wobei eine bestehende herkömmliche Sattelzugmaschine 2 einfach nachgerüstet werden kann.

Beim Kuppeln des Sattelzuges kann hierbei in einem ersten Schritt Sattelplatte 4 und Eingriffselement 5 miteinander gekuppelt werden und in einem zweiten Schritt die Nebenkuppelvorrichtung 10 mit der Nebenkupplungsaufnahme 19 gekuppelt werden.

Alternativ kann vorgesehen sein, dass die Haltestange 9 an dem zweiten Ende schwenkbar mit der Sattelzugmaschine 2 verbindbar ist. Hierbei kann beispielsweise eine Trennung der Sattelkupplung an dem Gabelgelenk 23 erfolgen.

Besonders bevorzugt kann vorgesehen sein, dass die Haltestange 9 eine variierbare Länge aufweist. Hierbei kann die Haltestange 9 insbesondere als Hubkolben oder als Teleskopstange ausgebildet sein. Dadurch kann bei einer Kippbewegung der Abstand zwischen dem Gabelgelenk 23 und der Nebenkuppelvorrichtung 10 leicht variiert werden, wobei die Längenänderung gut messbar ist.

Alternativ kann vorgesehen sein, dass an der Nebenkuppelvorrichtung 10 eine Öse angeordnet ist, wobei die Haltestange 9 beweglich bezüglich der Öse ist.

Besonders bevorzugt kann vorgesehen sein, dass der Drehwinkelaufnehmer 7 einen elektronischen Winkelsensor 11 aufweist, und dass der Winkelsensor 11 den Drehwinkel zwischen dem Ringelement 8 und dem Eingriffselement 5 zumindest mittelbar misst. Durch den elektronischen Winkelsensor 11 kann der Drehwinkel leicht weiterverarbeitbar erfasst werden. Der Winkelsensor 11 kann hierbei unmittelbar benachbart zu dem Ringelement 8 angeordnet sein.

Besonders bevorzugt kann vorgesehen sein, dass der Winkelsensor 11 optoelektronisch ausgebildet ist. Insbesondere kann der Winkelsensor 11 einen zum Eingriffselement 5 lagefesten Lichtsensor und eine am Ringelement 8 angeordnete Code-Scheibe umfassen. Hierbei kann der Drehwinkel auf einfache und zuverlässige Weise bestimmt werden. Ein derart ausgebildeter Winkelsensor 11 ist in den Fig. 1 bis 4 dargestellt.

Weiters kann vorgesehen sein, dass der Winkelsensor 11 als Drehpotenziometer ausgebildet ist.

Alternativ kann vorgesehen sein, dass eine Magnetfeldanordnung in dem Ringelement 8 oder dem Eingriffselement 5 angeordnet ist, und der Winkelsensor 11 die Veränderung des Magnetfeldes misst.

Besonders bevorzugt kann vorgesehen sein, dass das Ringelement 8 mit einem Getriebe 12 wirkverbunden ist, und dass das Getriebe 12 den Drehwinkel zwischen dem Ringelement 8 und dem Eingriffselement 5 mechanisch weiterleitet. Als Getriebe 12 wird hierbei eine Vorrichtung zum Übertragen der Drehbewegung verstanden. Das Getriebe 12 kann hierbei beispielsweise Zahnräder, Ketten, Zahnriemen, Keilriemen und dergleichen umfassen. Hierbei kann vorgesehen sein, dass das Getriebe 12 eine Umwandlung der Drehbewegung, also eine Übersetzung oder Untersetzung der Drehbewegung, bewerkstelligt. Durch das Getriebe 2 kann die Drehbewegung zunächst mechanisch von dem Eingriffselement 5 weggeführt werden, wobei die Drehbewegung anschließend mittels des Winkelsensors 11 in ein elektrisches Signal umgewandelt werden kann, oder direkt mechanisch zu der Zwangslenkung weitergeleitet werden kann.

Es kann weiters vorgesehen sein, dass an dem Ringelement 8 ein Zahnradelement 24 befestigt, insbesondere angeformt, ist. Durch das Zahnradelement 24 kann die Drehbewegung des Ringelementes 8 präzise an das Getriebe 12 weitergegeben werden.

Weiters kann vorgesehen sein, dass zwischen an dem Übergang zwischen dem Ringelement 8 und dem Zahnradelement 24 eine Abdeckplatte 25 angeordnet ist, welche das Getriebe 12 von der Umwelt abschirmt.

Besonders bevorzugt kann vorgesehen sein, dass das Getriebe 2 mit der Zwangslenkung mechanisch wirkverbunden ist, wobei eine Drehbewegung des Ringelementes 2 lediglich mechanisch an die Zwangslenkung weitergeleitet wird. Dadurch entfällt eine Umwandlung in elektronische Signale.

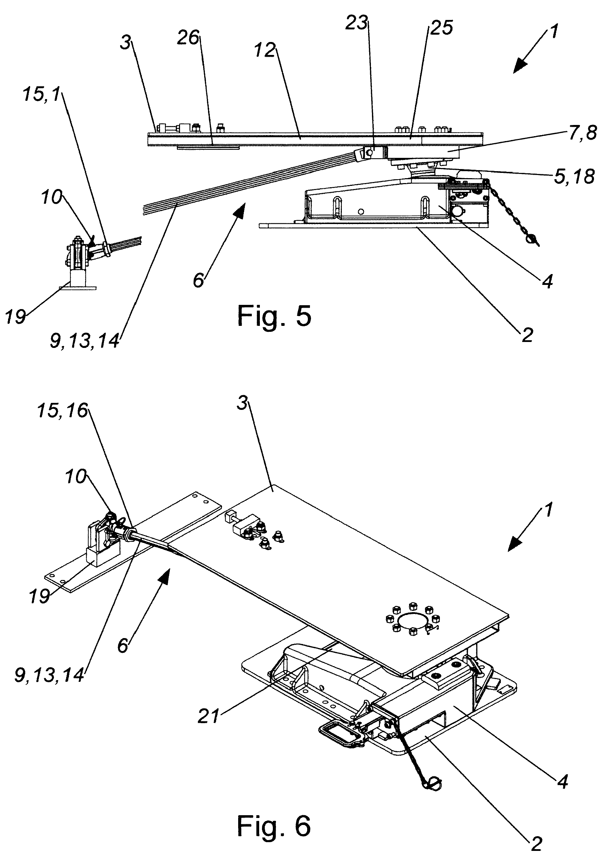

Insbesondere kann vorgesehen sein, dass das Getriebe 12 das Ringelement 8 mit einem Messrad 26 verbindet. Das Messrad 26 kann vorgesehen sein zur drehbar gelagerten Montage an dem Sattelanhänger 3. Das Messrad 26 kann hierbei die Drehbewegung des Ringelementes 8 in eine elektronisch weiterverarbeitbares elektrisches Signal umwandeln, wobei das Messrad 26 einen elektronischen Winkelsensor 11 darstellt. Hierbei kann vorgesehen sein, dass das Zahnradelement 24 und das Messrad 26 mittels eines als Zahnriemen ausgebildeten Getriebes 12 miteinander wirkverbunden sind. Eine derartige bevorzugte Ausführungsform ist in den Fig. 5 bis 11 dargestellt.

Besonders bevorzugt kann vorgesehen sein, dass die Winkelmessvorrichtung 6 einen Kippwinkelaufnehmer 13 zum Messen des Kippwinkels zwischen dem Eingriffselement 5 und der Sattelplatte 4 aufweist. Hierbei kann vorgesehen sein, dass der Kippwinkel zwischen dem Eingriffselement 5 und der Sattelplatte 4 mittels eines Kippwinkelaufnehmers 13 der Winkelmessvorrichtung 6 gemessen wird. Der Kippwinkel ist - in Geradeausfahrt des Sattelzuges - der Winkel um eine Drehachse, welche horizontal und orthogonal zu der Längsrichtung des Sattelzuges verläuft. Durch die Messung des Kippwinkels kann dem Fahrer des Sattelzuges angezeigt werden, ob eine Abkuppeln gefahrlos möglich ist. Weiters kann der Kippwinkel verwendet werden, um Nichtlinearitäten bei der Ermittlung des Drehwinkels aus dem Relativwinkel zwischen Ringelement 8 und Eingriffselement 5 zu bestimmen. Derartige Nichtlinearitäten können insbesondere bei hohen Kippwinkeln auftreten.

Besonders bevorzugt kann vorgesehen sein, dass der maximale Kippwinkel der Sattelkupplung mindestens 20° in beide Richtungen beträgt.

Insbesondere kann vorgesehen sein, dass der Kippwinkelaufnehmer 13 einen Abstandsensor 14 zur Aufnahme des Abstandes zwischen dem ersten Ende der Haltestange 9 und der Nebenkuppelvorrichtung 10 aufweist. Der Abstandsensor 14 kann insbesondere als ein in der Haltestange 9 integrierter Hubkolben ausgebildet sein. Dadurch kann der Abstandsensor 14 besonders einfach ausgebildet sein. In einer Geradeausfahrt des Sattelzuges kann der Kippwinkel direkt durch diesen Abstand bestimmt werden.

Alternativ kann vorgesehen sein, dass Abstandsensor 14 optoelektronisch ausgebildet ist, wobei der gemessene Lichtstrahl im Wesentlichen parallel zu der Haltestange 9 verläuft.

Gemäß einer nicht dargestellten Ausführungsform kann vorgesehen sein, dass der Kippwinkelaufnehmer 13 einen zur Sattelplatte 4 lagefesten ersten Neigungssensor aufweist und einen zum Eingriffselement 5 lagefesten zweiten Neigungssensor aufweist, wobei der Kippwinkel durch den Vergleich der beiden Neigungssensoren bestimmt wird.

Besonders bevorzugt kann vorgesehen sein, dass die Winkelmessvorrichtung 6 einen Wankwinkelaufnehmer 15 zum Messen des Wankwinkels zwischen dem Eingriffselement 5 und der Sattelplatte 4 aufweist. Hierbei kann vorgesehen sein, dass der Wankwinkel zwischen dem Eingriffselement 5 und der Sattelplatte 4 mittels des Wankwinkelaufnehmers 15 der Winkelmessvorrichtung 6 gemessen wird. Der Wankwinkel ist - in Geradeausfahrt des Sattelzuges - der Winkel um eine Drehachse, welche parallel zu der Längsrichtung des Sattelzuges verläuft. Durch die Messung des Wankwinkels kann eine Warnung an den Fahrer ausgegeben werden, wenn der Sattelanhänger 3 stark ins Wanken gerät. Weiters kann vorgesehen sein, dass der Sattelanhänger 3 eine Stabilisierungsvorrichtung aufweist, welche starke Wankbewegungen des Sattelanhängers 3, beispielsweise durch die Veränderung der Federung der Radaufhängung, automatisch unterbinden kann. Weiters kann der Wankwinkel verwendet werden, um Nichtlinearitäten bei der Ermittlung des Drehwinkels aus dem Relativwinkel zwischen Ringelement 8 und Eingriffselement 5 zu bestimmen. Derartige Nichtlinearitäten können insbesondere bei hohen Wankwinkeln auftreten.

Besonders bevorzugt kann vorgesehen sein, dass der maximale Wankwinkel der Sattelkupplung mindestens 20° in beide Richtungen beträgt.

Insbesondere kann vorgesehen sein, dass der Wankwinkelaufnehmer 15 einen Verdrehungssensor 16 zur Aufnahme einer Verdrehung der Haltestange 9 um deren Längsachse aufweist. Dadurch kann der Wankwinkelaufnehmer 15 besonders einfach ausgebildet sein. Sofern die Haltestange 9 im Wesentlichen parallel zu der Längsachse der Sattelzugmaschine 2 verläuft, entspricht die Verdrehung der Haltestange 9 bei einer Geradeausfahrt im Wesentlichen dem Wankwinkel.

Gemäß einer nicht dargestellten Ausführungsform kann vorgesehen sein, dass der Wankwinkelaufnehmer 15 einen zur Sattelplatte 4 lagefesten ersten Neigungssensor aufweist und einen zum Eingriffselement 5 lagefesten zweiten Neigungssensor aufweist, wobei der Wankwinkel durch den Vergleich der beiden Neigungssensoren bestimmt wird.

Besonders bevorzugt kann vorgesehen sein, dass die Winkelmessvorrichtung 6 eine Steuereinheit umfasst, und dass die Steuereinheit am Eingang wenigstens mit dem Drehwinkelaufnehmer 7 wirkverbunden ist. Die Steuereinheit kann ausgangsseitig mit der Zwangslenkung des Sattelanhängers 3 wirkverbunden sein.

Besonders bevorzugt kann vorgesehen sein, dass die Steuereinheit am Eingang mit dem Kippwinkelaufnehmer 13 und dem Wankwinkelaufnehmer 15 verbunden ist. Hierbei hat die Steuereinheit als Eingangsgrößen die Messwerte des Drehwinkelaufnehmers 7, des Kippwinkelaufnehmers 13 und des Wankwinkelaufnehmers 15. Hierbei können der Drehwinkelaufnehmer 7, der Kippwinkelaufnehmer 13 und der Wankwinkelaufnehmer 15 Messgrößen ausgeben, welche zur Ermittlung des tatsächlichen Drehwinkels, Kippwinkels oder Wankwinkels in der Steuereinheit miteinander kombiniert werden können. Bei einem großen Drehwinkel hängt der Kippwinkel beispielsweise stark von der ausgegebenen Messgröße des Wankwinkelaufnehmers 15 ab. Die Steuereinheit kann hierbei insbesondere Tabellen von den Messgrößen der Aufnehmer und den entsprechenden Winkeln aufweisen. Durch die Kombination von zwei, insbesondere aller drei, Messgrößen der drei Aufnehmer können die betreffenden Winkel auch bei großen Verwindungen der Sattelkupplung zuverlässig ermittelt werden.

Weiters kann vorgesehen sein, dass die Steuereinheit ausgangsseitig Stabilisierungsvorrichtung wirkverbunden ist.

## Patentansprüche

1. Sattelkupplung (1) zur Kupplung einer Sattelzugmaschine (2) mit einem Sattelanhänger (3), mit einer Sattelplatte (4) zur Montage auf der Sattelzugmaschine (2) und einem Eingriffselement (5) zur Montage auf dem Sattelanhänger (3), wobei eine Winkelmessvorrichtung (6) umfassend einen Drehwinkelaufnehmer (7) zur Messung des Drehwinkels zwischen dem Eingriffselement (5) und der Sattelplatte (4) vorgesehen ist, wobei die Winkelmessvorrichtung (6) ein Ringelement (8) umfasst, dass das Ringelement (8) das Eingriffselement (5) zumindest teilweise umschließt und bezüglich des Drehwinkels gegenüber dem Eingriffselement (5) verdrehbar gelagert ist, wobei das Ringelement (8) bezüglich des Drehwinkels lagefest zu der Sattelplatte (4) gehalten ist, **dadurch gekennzeichnet, dass** eine Haltestange (9) an einem ersten Ende an dem Ringelement (8) vertikal verschwenkbar gelagert ist und an einem zweiten Ende eine Nebenkuppelvorrichtung (10) zum schwenkbaren Kuppeln der Haltestange (9) an die Sattelzugmaschine (2) aufweist.

2. Sattelkupplung (1) nach Anspruch 1, **dadurch gekennzeichnet, dass** der Drehwinkelaufnehmer (7) einen elektronischen Winkelsensor (11) aufweist, und dass der Winkelsensor (11) den Drehwinkel zwischen dem Ringelement (8) und dem Eingriffselement (5) zumindest mittelbar misst.

3. Sattelkupplung (1) nach Anspruch 1 oder 2, **dadurch gekennzeichnet, dass** das Ringelement (8) mit einem Getriebe (12) wirkverbunden ist, und dass das Getriebe (12) den Drehwinkel zwischen dem Ringelement (8) und dem Eingriffselement (5) mechanisch weiterleitet.

4. Sattelkupplung (1) nach einem der Ansprüche 1 bis 3, **dadurch gekennzeichnet, dass** die Winkelmessvorrichtung (6) einen Kippwinkelaufnehmer (13) zum Messen des Kippwinkels zwischen dem Eingriffselement (5) und der Sattelplatte (4) aufweist.

5. Sattelkupplung (1) nach Anspruch 4, **dadurch gekennzeichnet, dass** der Kippwinkelaufnehmer (13) einen Abstandsensor (14) zur Aufnahme des Abstandes zwischen dem ersten Ende der Haltestange (9) und der Nebenkuppelvorrichtung (10) aufweist.

6. Sattelkupplung (1) nach einem der Ansprüche 1 bis 5, **dadurch gekennzeichnet, dass** die Winkelmessvorrichtung (6) einen Wankwinkelaufnehmer (15) zum Messen des Wankwinkels zwischen dem Eingriffselement (5) und der Sattelplatte (4) aufweist.

7. Sattelkupplung (1) nach Anspruch 6, **dadurch gekennzeichnet, dass** der Wankwinkelaufnehmer (15) einen Verdrehungssensor (16) zur Aufnahme einer Verdrehung der Haltestange (9) um deren Längsachse aufweist.

8. Sattelkupplung (1) nach einem der Ansprüche 1 bis 7, **dadurch gekennzeichnet, dass** das Eingriffselement (5) eine Kupplungskugel (17) aufweist.

9. Sattelkupplung (1) nach Anspruch 8, **dadurch gekennzeichnet, dass** an de Kupplungskugel (17) ein Hals (18) angeformt ist, und dass eine Verbindungslinie zwischen einem Mittelpunkt der Kupplungskugel (17) und dem Hals (18) einen Winkel zwischen 3° und 10° zu einer Horizontalen einschließt.

10. Sattelkupplung (1) nach einem der Ansprüche 1 bis 9, **dadurch gekennzeichnet, dass** die Winkelmessvorrichtung (6) eine Steuereinheit umfasst, und dass die Steuereinheit am Eingang wenigstens mit dem Drehwinkelaufnehmer (7) wirkverbunden ist.

11. Sattelzug umfassend eine Sattelzugmaschine (2) und einen Sattelanhänger (3), **dadurch gekennzeichnet, dass** die Sattelzugmaschine (2) und der Sattelanhänger (3) mittels einer Sattelkupplung (1) nach einem der Ansprüche 1 bis 10 miteinander gekuppelt sind.

12. Sattelzug nach Anspruch 11, **dadurch gekennzeichnet, dass** der Sattelanhänger (3) eine Zwangslenkung aufweist, und dass der Lenkwinkel der Zwlangslenkung durch die Winkelmessvorrichtung (6) vorgegeben ist.

13. Sattelzug nach Anspruch 11 oder 12, **dadurch gekennzeichnet, dass** die Sattelzugmaschine (2) eine Nebenkupptungsaufnahme (19) zum Kuppeln mit der Nebenkuppelvorrichtung (10) aufweist.

## Claims

1. A fifth-wheel coupling (1) for coupling a tractor unit (2) to a semitrailer (3), having a fifth-wheel plate (4) for mounting on the tractor unit (2) and an engagement element (5) for mounting on the semitrailer (3), wherein an angle measuring device (6), comprising a rotational angle pickup (7) for measuring the rotational angle, is provided between the engagement element (5) and the fifth-wheel plate (4), wherein the angle measuring device (6) comprises a ring element (8), the ring element (8) at least partially encloses the engagement element (5) and is mounted so it is pivotable with respect to the rotational angle in relation to the engagement element (5), wherein the ring element (8) is held fixed in location with respect to the rotational angle in relation to the saddle plate (4), **characterized in that** a holding rod (9) is mounted so it is vertically pivotable at a first end on the ring element (8) and has, at a second end, a secondary coupling device (10) for pivotable coupling of the holding rod (9) on the tractor unit (2).

2. The fifth-wheel coupling (1) according to Claim 1, **characterized in that** the rotational angle pickup (7) has an electronic angle sensor (11), and the angle sensor (11) at least indirectly measures the rotational angle between the ring element (8) and the engagement element (5).

3. The fifth-wheel coupling (1) according to Claim 1 or 2, **characterized in that** the ring element (8) is operationally connected to a transmission (12), and the transmission (12) mechanically relays the rotational angle between the ring element (8) and the engagement element (5).

4. The fifth-wheel coupling (1) according to any one of Claims 1 to 3, **characterized in that** the angle measuring device (6) has a tilt angle pickup (13) for measuring the tilt angle between the engagement element (5) and the fifth-wheel plate (4).

5. The fifth-wheel coupling (1) according to Claim 4, **characterized in that** the tilt angle pickup (13) has a distance sensor (14) for recording the distance between the first end of the holding rod (9) and the secondary coupling device (10).

6. The fifth-wheel coupling (1) according to any one of Claims 1 to 5, **characterized in that** the angle measuring device (6) has a roll angle pickup (15) for measuring the roll angle between the engagement element (5) and the fifth-wheel plate (4).

7. The fifth-wheel coupling (1) according to Claim 6, **characterized in that** the roll angle pickup (15) has a pivot sensor (16) for recording a pivot of the holding rod (9) about its longitudinal axis.

8. The fifth-wheel coupling (1) according to any one of Claims 1 to 7, **characterized in that** the engagement element (5) has a coupling ball (17).

9. The fifth-wheel coupling (1) according to Claim 8, **characterized in that** a neck (18) is formed on the coupling ball (17), and a connecting line between a center point of the coupling ball (17) and the neck (18) encloses an angle between 3° and 10° in relation to a horizontal line.

10. The fifth-wheel coupling (1) according to any one of Claims 1 to 9, **characterized in that** the angle measuring device (6) comprises a control unit, and the control unit is operationally connected at the input at least to the rotational angle pickup (7).

11. A tractor-trailer comprising a tractor unit (2) and a semitrailer (3), **characterized in that** the tractor unit (2) and the semitrailer (3) are coupled to one another by means of a fifth-wheel coupling (1) according to any one of Claims 1 to 10.

12. The tractor-trailer according to Claim 11, **characterized in that** the semitrailer (3) has a forced steering unit, and the steering angle of the forced steering unit is specified by the angle measuring device (6).

13. The tractor-trailer according to Claim 11 or 12, **characterized in that** the tractor unit (2) has a secondary coupling receptacle (19) for coupling to the secondary coupling device (10).

## Revendications

1. Attelage articulé (1) pour l'attelage d'un tracteur routier (2) avec une semi-remorque (3), avec une plaque d'attelage (4) pour le montage sur le tracteur routier (2) et un élément d'engagement (5) pour le montage sur la semi-remorque (3), dans lequel un dispositif de mesure d'angle (6) comprenant un capteur d'angle de rotation (7) est prévu pour mesurer l'angle de rotation entre l'élément d'engagement (5) et la plaque d'attelage (4), le dispositif de mesure d'angle (6) comprenant un élément annulaire (8), lequel élément annulaire (8) entoure au moins en partie l'élément de prise (5) et est supporté de façon pivotante en ce qui concerne l'angle de rotation par rapport à l'élément de prise (5), l'élément annulaire (8) étant maintenu en position par rapport à la plaque d'attelage (4) en ce qui concerne la rotation, **caractérisé en ce qu'**une barre de maintien (9) est supportée avec possibilité de pivotement vertical à une première extrémité sur l'élément annulaire (8) et présente à une deuxième extrémité un dispositif d'attelage secondaire (10) pour l'accouplement pivotant de la barre de maintien (9) au tracteur routier (2).

2. Attelage articulé (1) selon la revendication 1, **caractérisé en ce que** le capteur d'angle de rotation (7) présente un capteur d'angle électronique (11) et **en ce que** le capteur d'angle (11) mesure au moins indirectement l'angle de rotation entre l'élément annulaire (8) et l'élément de prise (5).

3. Attelage articulé (1) selon la revendication 1 ou 2, **caractérisé en ce que** l'élément annulaire (8) est en liaison active avec un engrenage (12) et **en ce que** l'engrenage (12) transmet par un moyen mécanique l'angle de rotation entre l'élément annulaire (8) et l'élément de prise (5).

4. Attelage articulé (1) selon l'une des revendications 1 à 3, **caractérisé en ce que** le dispositif de mesure d'angle (6) comprend un capteur d'angle de basculement (13) pour mesurer l'angle de basculement entre l'élément de prise (5) et la plaque d'attelage (4).

5. Attelage articulé (1) selon la revendication 4, **caractérisé en ce que** le capteur d'angle de basculement (13) comprend un détecteur de distance (14) pour acquérir la distance entre la première extrémité de la barre de maintien (9) et le dispositif d'attelage secondaire (10).

6. Attelage articulé (1) selon l'une des revendications 1 à 5, **caractérisé en ce que** le dispositif de mesure d'angle (6) comprend un capteur d'angle de roulis (15) pour mesurer l'angle de roulis entre l'élément de prise (5) et la plaque d'attelage (4).

7. Attelage articulé (1) selon la revendication 6, **caractérisé en ce que** le capteur d'angle de roulis (15) comprend un capteur de torsion (16) pour acquérir une torsion de la barre de maintien (9) autour de son axe longitudinal.

8. Attelage articulé (1) selon l'une des revendications 1 à 7, **caractérisé en ce que** l'élément de prise (5) comprend une boule d'attelage (17).

9. Attelage articulé (1) selon la revendication 8, **caractérisé en ce qu'**un col (18) est formé sur la boule d'attelage (17) et **en ce qu'**une ligne reliant le centre de la boule d'attelage (17) et le col (18) forme un angle de 3° à 10° par rapport à l'horizontale.

10. Attelage articulé (1) selon l'une des revendications 1 à 9, **caractérisé en ce que** le dispositif de mesure d'angle (6) comprend une unité de commande et **en ce que** l'unité de commande est en liaison active à l'entrée au moins avec le capteur d'angle de rotation (7).

11. Train routier articulé comprenant un tracteur routier (2) et une semi-remorque (3), **caractérisé en ce que** le tracteur routier (2) et la semi-remorque (3) sont attelés l'un à l'autre au moyen d'un attelage articulé (1) selon l'une des revendications 1 à 10.

12. Train routier articulé selon la revendication 11, **caractérisé en ce que** la semi-remorque (3) présente une direction forcée et **en ce que** l'angle de direction de la direction forcée est prédéterminé par le dispositif de mesure d'angle (6).

13. Train routier articulé selon la revendication 11 ou 12, **caractérisé en ce que** le tracteur routier (2) comprend un réceptacle d'attelage secondaire (19) pour l'accouplement au dispositif d'attelage secondaire (10).
